# EUROPEAN PATENT SPECIFICATION

(11) **EP 3 424 347 B1**
(45) Date of publication and mention of the grant of the patent: **28.07.2021**
(21) Application number: 15791382.3
(22) Date of filing: 28.09.2015
(51) Int. Cl.: A23L 11/00, A23P 30/20

(54) **SOY PASTE DEHYDRATION DEVICE AND RESPECTIVE DEHYDRATION PROCESS**
VORRICHTUNG ZUR DEHYDRIERUNG VON SOJAPASTE UND ENTSPRECHENDES DEHYDRIERUNGSVERFAHREN
DISPOSITIF DE DÉSHYDRATATION DE LA PÂTE DE SOJA ET PROCÉDÉ DE DÉSHYDRATATION CORRESPONDANT

(43) Date of publication of application: 09.01.2019
(73) Proprietor: WHITE AND GREEN NATURAL, S.A., 3840-385 Vagos (PT)
(72) Inventor: BENTO DOS SANTOS, Ricardo Filipe Conceição, 2005-518 Santarém (PT)
(74) Representative: Ferreira Magno, Fernando Antonio
(86) International application number: PCT/PT2015/000045
(87) International publication number: WO 2017/058037

(56) References cited:
- JP-A- H10 165 126
- JP-A- S60 227 650
- JP-A- 2001 027 479
- JP-A- 2001 340 840
- WACHIRAPHANSAKUL ET AL: "Drying kinetics and quality of okara dried in a jet spouted bed of sorbent particles", LWT- FOOD SCIENCE AND TECHNOLOGY, ACADEMIC PRESS, UNITED KINGDOM, vol. 40, no. 2, 1 March 2007 (2007-03-01), pages 207-219, XP005683465, ISSN: 0023-6438
- None

## Description

The present invention refers to a soy paste dehydration device as well as to the respective soy paste dehydration process.

The soy is a very important raw food in Japan and in other oriental countries, which can be used in the production of some traditional foodstuff, such as, for example, soy milk, tofu (fabricated from the coagulation of the soy milk), etc.

The raw material used in said fabrication is composed by soy beans, which are peeled off, it being added water thereto. The mixture of the peeled off soy beans and water is crushed at a temperature between 40 and 95°C, it being obtained a product that contains a water solution of the water soluble soy protein and a soy paste which contains the soy elements insoluble in the water.

The soy milk extraction involves the separation of the liquid fraction by mechanical means of said product. The resulting byproduct (soy paste) is quite humid, its degree of humidity depending on the efficiency with which is removed the water phase from said paste. Therefore, due to the water content in the soy paste at the end of the process, the activity of the water is also high, causing a rapid putrefaction of the soy paste (Noguchi 1987)

The byproduct obtained after the soy milk extraction, for example, for the production of tofu, is denominated soy paste (*"okara"* in Japanese), its denomination varying from country to country (Noguchi 1987). It is produced about 1,1 kg of fresh soy paste from each Kilo of raw material (soy beans) processed for obtaining soy milk (Khare, Jha et al. 1995). Therefore, there are produced big quantities of soy paste only in Japan there were obtained, for example, 700 000 tons in the tofu production in 1986 (Ohno, Ano et al. 1993).

The soy paste can be used in animal feeding (Noguchi 1987) or burned as waste as it happens in Japan (Ohno, Ano et al. 1993) and in Hong-Kong it is disposed in waste dumps. Some investigation efforts have been dedicated with the purpose of conceiving an utilization of this byproduct from the soy processing industry, some of which have been directed to the development of processed foodstuffs directly to human consumption or by its incorporation in other products. The rational base for this strategy has been the one to take advantage of the soy paste interesting proprieties, such as its fibre and protein content (it being able to be used as a partial substitute for meat), as well as its power to improve the textural quality of several products. (O'Toole 1999). As examples of enriched foodstuffs with soy paste we have: cheese bread (Aplevicz and Demiate 2007), bread of French type (Bowles and Demiate 2006), *"snackfood"* (Katayama and Wilson 2008), breakfast cereals (Rotem and Almog ; Santos, Bedani et al. 2008), cookies (Gundyaeva, Lukina et al. ; Grizotto, Rufi et al. 2010), meat pastry (Turhan, Temiz et al. 2007; Turhan, Temiz et al. 2009), carrot cake (Liu and Tan), corn tortilla (Waliszewski, Pardio et al. 2002) and chicken hamburgers (Bomdespacho, Cavallini et al. 2011).

Efforts have been made by the industry to try to enhance the recovery of the soy paste, which for many people represents a cost. These attempts are connected to the incorporation of the soy paste in other products, which presupposes its use immediately after the production (in order to avoid degradation). Another disadvantage is that its incorporation in other products is limited, which leaves the industry with a mitigated problem instead of being solved.

The soy paste is a source of important nutrients which are not extracted or that are sparingly soluble in water (Noguchi 1987). The nutritional composition (Table 1) depends on the present water quantity. Initially, the soy paste presents great amounts of water (approximately 80%) (Tadano, Yokova et al. 1981), but when dried, the amount of water decreases significantly to approximately 9% (Matsumoto, Watanabe et al. 2007).

**Table 1 - Nutritional composition of the soy paste**

| **Soy paste** | **Total solids (%)** | **Wate r (%)** | **Protein (%)** | **Lipids (%)** | **Fibres (%)** | **Carbohydrates (%)** | **Minerals (mg/100g)** | **Energy (Kcal)** | **pH** | **Authors** |
|---|---|---|---|---|---|---|---|---|---|---|
| Not dry | - | 84,5 | 4,73 | 1,5 | 1,5 | 7 | 0,4 | - | 6,71 | (Tadano. Yokova et al. 1981) |
| dry | | 8,9 | 24 | 15,2 | 42,8 | | 4 | 338,8 | | (Matsumoto. Watanabe et al. 2007) |
| | 93,5 | | 41,3 | 0,9 | | 46,2 | 5,04 | | | (Vishwanathan. Govindaraju et al. 2011) |

Several authors have found in the soy paste a total concentration of 35,7 mg% of isoflavones, it have been identified twelve different compounds (Bowles and Demiate 2006). Other authors have concluded that approximately one third of the content in isoflavones in the soy is transferred to the soy paste (Jackson, Dini et al. 2002). In this way, given the high protein concentration of the soy paste, which is very much similar to the soy beans, the soy paste presents a great potential to be used as nutrient and isoflavones source. The isoflavones can have applications at a functional level, contributing namely to the reduction of the cholesterol levels, it being already nowadays added isoflavones to several foodstuff (for example yoghurts) with this purpose.

Some effects of the soy in health have been observed. Recently, *in vitro* analyses have indicated that the soy paste is a good source of antioxidant components (Amin and Mukhrizah 2006). It has been already observed that under simulated physiologic conditions, the soy paste can free potentially bioactive peptides (Jimenez-Escrig, Alaiz et al. 2010). The antioxidant activity shown by the soy paste is mainly due to pectins, although the contribution of the proteins should not be excluded (Mateos-Aparicio, Mateos-Peinado et al. 2010).

Attempts have been made to avoid the microbiologic deterioration of the soy paste by fermentation, it being used lactic bacteria (Kato, Shiga et al. 1986). Therefore, there have been added yoghurt and lactic bacteria to soy paste with or without 1% of glucose and the mixture was subjected to aerobic and anaerobic conditions. In aerobic conditions, the deterioration has occurred rapidly, but in anaerobic conditions when the soy paste is wrapped in a bag of polyetilene film (or in vials), it has occurred a lactic fermentation, causing the decrease of the pH to 4,2 and inhibiting the growth of bacteria promoting the deterioration during 4 days, at 37°C.

Another conservation method consists in performing the drying of the soy paste as soon as it is obtained. Some authors studied the dehydration and cohesion proprieties of the soy paste using water absorbing synthetic polymers (Muramatsu, Karasawa et al. 1995; Muramatsu, Karasawa et al. 1995; Muramatsu, Karasawa et al. 1995).

By using a pneumatic system to dry the soy paste it has been observed that the rehydrating proprieties were good but the shelf life time was short (0,5 month at 5°C) with a humidity content of 25,3%, however with a humidity content of 7,4%, the shelf life time would be 8 months, at 5°C (Tadano, Yokova et al. 1981).

The document JP S60 227650 A is considered to represent the closest prior art, this document discloses a twin-screw extruder device for drying soy bean curd waste. An electric motor and gear for driving the screws are implicitly disclosed. An electric element is used to heat the waste. A cooling circuit with flow regulation valves and temperature sensor is also implicitly disclosed. A firs passage region is defined between the inlet end of the extruder barrel and the downstream end of the heating element. The subject-matter of claim 1 differs from JP S60 227650 A in that the second, third, forth and fifth passages regions are present.

The soy drink production industry has therefore an economical, ambient and food safety problem resultant from its activity. During the extraction of the soluble protein from the soy bean it is generated a byproduct hereinafter referred by soy paste with a humidity content of 80-82%.

The soy paste is an insoluble byproduct, after the separation of the liquid phase (soy drink) from the solid phase. Despite the soy paste has a substantially rich nutritional value it is considered as a disposable byproduct, conducting to relevant economical losses for its correct disposal (a problem very much felt by the applicant).

The environmental problems are because it is a byproduct which presents a very high microbiologic activity that generates odours and constitutes a danger to public health, reason why this byproduct is frequently disposed in waste dumps.

The food safety can also be questioned if the disposal of this byproduct is not made daily given their rapid degradation.

The object of present invention is to provide a dehydration device and dehydration process to be performed in the device for the manufacturing of products for animal or human feeding with a minimal shelf life of 1 year, taking advantage of this byproduct (soy paste) of the soy drink industry.

The soy paste dehydration device of the present invention comprises a main body (1) and a feeder (18), being mounted in said main body (1) a main endless screw conveyor (50), a driving electric motor (23), a gear box (24), these two last components serving to drive said conveyor (50), which is arranged in the interior of the main body (1), characterized in that there are defined in the interior of said main endless screw conveyor (50) six passage regions:
a first passage region between the intake of the soy paste and the downstream end of the first heating resistance (6), which involves in a relatively long extension the chamber of the main endless screw conveyor (50);
   - a second passage region, where the soy paste is subjected to a first compression with heating, between the heating resistance (6) and the heating resistance (7), which involves the chamber of the main endless screw conveyor (50);
   - a third passage region, where the soy paste is subjected to evaporation under vacuum, by means of an evaporator, between the heating resistance (7) and the heating resistance (8), which involve the chamber of the main endless screw conveyor (50);
   - a fourth lengthy passage region, where the soy paste is subjected to a second compression with heating between the heating resistance (8) and the heating resistance (9) and between the heating resistance (9) and the heating resistance (10), said heating resistances (9 and 10) involving the chamber of the main endless screw conveyor (50);
   - a fifth passage region, where the soy paste is subjected to evaporation under vacuum, by means of an evaporator, between the heating resistance (10) and the heating resistance (11), which involves the chamber of the main endless screw conveyor (50);
   - a sixth passage region where the soy paste is subjected to a third compression with heating, between the heating resistance (11) and the extrusion head (25), it being interposed in this region a heating resistance (12), said sixth region ending in the extrusion head (25), which is heated by two heating resistances (13 and 14);
the temperatures of said heating resistances varying between the following values: - resistances (6, 7, 8 and 9) from 250°C to 350°C; - resistances (10, 11 and 12) from 200°C to 300°C; - resistances (13 and 14) from 150°C to 200°C:
   the temperature of said heating resistances (6, 7, 8, 9, 10, 11 and 12) being regulated by a cooling circuit, which comprises the flow regulation valves (38, 39, 40, 41, 42, 43, 44) and the temperature sensors (52, 53, 54, 55, 56, 57 and 58);
   in that there are mounted in the main body of the dehydration device, at least, two evaporators that work under vacuum conditions, which are in communication with said third and fifth passage regions; and
   in that said main endless screw conveyor (50) comprises two endless screws (50', 50").

Preferably the heating resistances (6, 7, 8, 9, 10, 11 and 12) are annular resistances, arranged spaced between each other in the chamber of the main endless screw conveyor (50).

The soy paste dehydration process to be performed in the device according to the inventio comprises the following steps of:
a) automatic feeding of the main endless screw conveyor (50) with the soy paste, by means of the feeder (18);
b) conveying of said soy paste through the main endless screw conveyor (50) from its intake and heating in the lengthy first passage region in the interior of said main endless screw conveyor (50), between said intake and heating resistance (6);
c) compression with heating of said soy paste during said conveying in a second passage region in said main endless screw conveyor (50), between the heating resistance (6) and the heating resistance (7);
d) dehydration of said soy paste by subjecting the same to an evaporation under vacuum during said conveying in a third passage region in said main endless screw conveyor (50), between the heating resistance (7) and the heating resistance (8);
e) compression with heating of said soy paste, during said conveying in a fourth lengthy passage region in said main endless screw conveyor (50), between the heating resistance (8) and the heating resistance (9) and between the heating resistance (9) and the heating resistance (10);
f) dehydration of said soy paste by subjecting the same to evaporation under vacuum in a fifth passage region in said main endless screw conveyor (50), between the heating resistance (10) and the heating resistance (11);
g) compression with heating of said soy paste during said conveying in a sixth passage region in said main endless screw conveyor (50), between the heating resistance (11) and the extrusion head (25), being interposed in this region a heating resistance (12);
h) extrusion with heating of said soy paste in the extrusion head (25), by the heating resistances (13 and 14) arranged in the extrusion head (25) in order to optimize said extrusion step;
in that the working temperatures of the heating resistances vary between the following values: - resistances (6, 7, 8 and 9) from 250°C to 350°C; - resistances (10, 11 and 12) from 200°C to 300°C; - resistances (13 and 14) from 150°C to 200°C;
in that it further comprises the additional steps d') and f') of evaporation under vacuum and of recuperation of soy paste residual portions dragged to the discharge due to the evaporation under vacuum, during the realization of the dehydration steps d) and f); and
in that in steps d) and f) it is used a pressure in the evaporators of -0,5 to -0,7 bar, and in that the working temperature of the resistance associated to the evaporators vary between 110°C and 130°C.

In order to illustrate more clearly the innovative principles and advantages of the present invention it will hereinafter be described a preferred embodiment of said dehydration device and of the respective dehydration process with reference to an example of embodiment, not limitative, with the help of the attached drawings, in which:
Fig. 1 is a side elevation schematic view of the dehydration device according to the invention;
Fig. 2 is a top schematic view of the device of Fig. 1;
Fig. 3 is a right side schematic view of the device of Fig. 1;

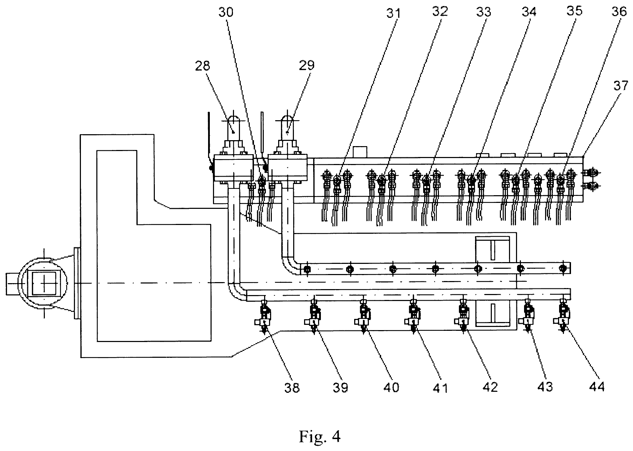

Fig. 4 is a top schematic partial view of the device of Fig. 1;
Fig. 5 is a top schematic partial view of the device of Fig. 1;
Fig. 6 is a schematic partial view of one of the evaporators used in the evaporation regions of the main endless screw conveyor;
Fig. 7 shows a cut detail of the almost cylindrical body of one of the evaporators.

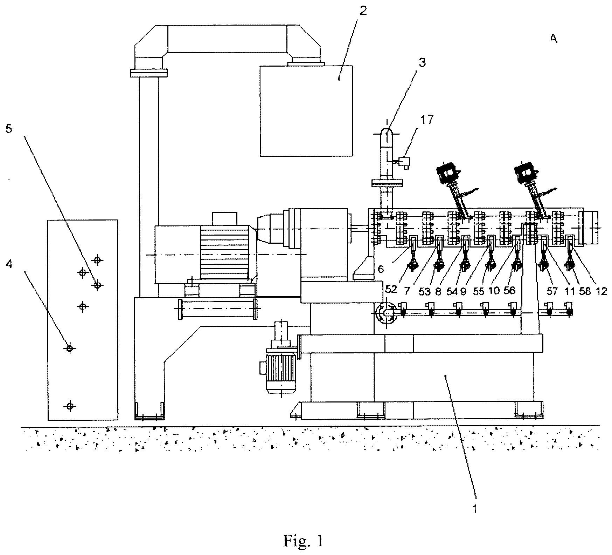

As shown in Figs. 1, 2, 3 and 5, the soy paste dehydration device consists in a main body 1. In said main body 1 are mounted a main endless screw conveyor 50, a driving electric motor 23, a gear box 24, for driving of said conveyor 50, in which opposed end to said gear box 24 there is arranged an extrusion head 25. The soy paste dehydration device further consists in a feeder 18.

The intake of the main body 1 of the dehydration device communicates with a main endless screw conveyor 50, arranged in its interior, which presents two endless screws 50' and 50". In the interior of the main body 1 and along the two endless screws 50' and 50" there are defined six passage regions.

Said two endless screws 50' and 50" are driven by said driving electric motor 23 by means of the gear box 24, which is coupled to said main endless screw conveyor 50.

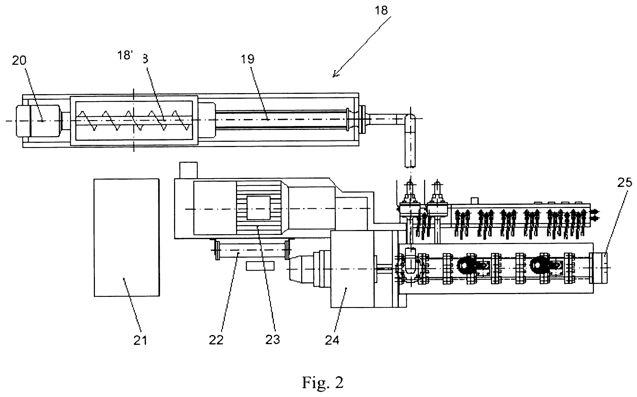

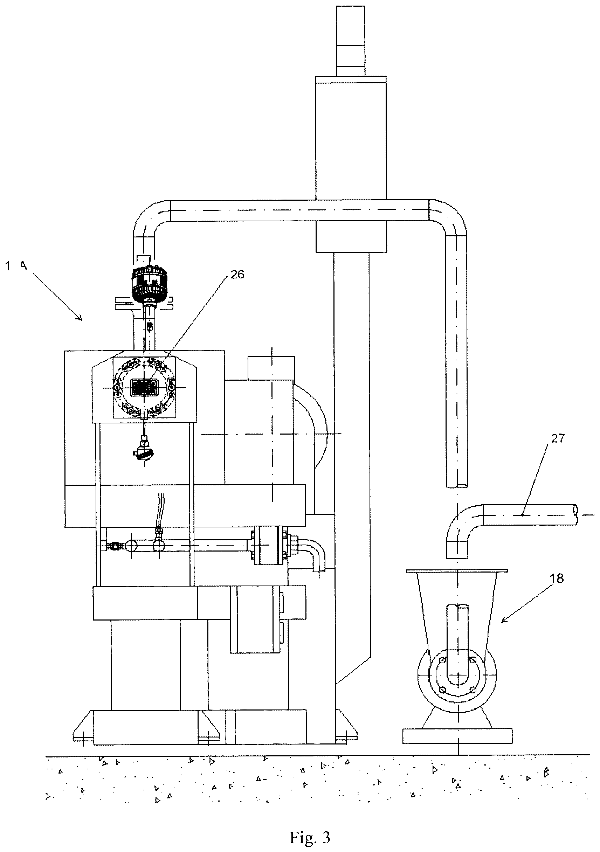

As shown in Figs. 2 and 3, the feeder 18 comprises a first open body endless screw conveyor 18' of reception of the soy paste, coming from the soy drink production process through the discharge tube 27, the soy paste being conveyed to the second closed body endless screw conveyor 19. Said feeder 18 is driven by a driving electric motor 20 arranged in the rear part of the feeder 18. The feeder 18 is connected by a tube to the intake of the main body 1. The normal supply pressure is in the range of 0,5 to 3 bar.

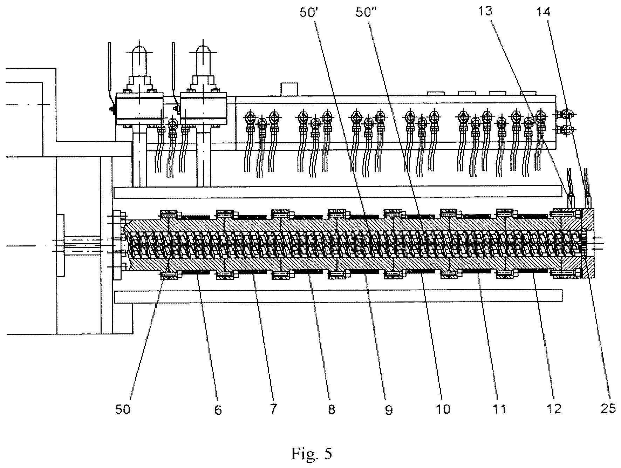

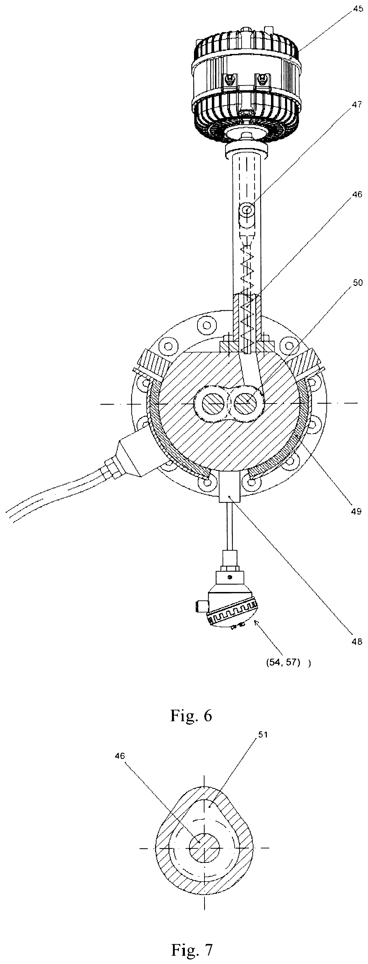

As shown in Fig. 5, in the chamber of the main endless screw conveyor 50 there are defined six passage regions namely:
- a first passage region between the intake of the soy paste and the downstream end of the first heating resistance 6, which involves in a relatively long extension the chamber of the main endless screw conveyor 50;
- a second passage region where the soy paste is subjected to a first compression with heating, between the heating resistance 6 and the heating resistance 7, which involves the chamber of the main endless screw conveyor 50;
- a third passage region, where the soy paste is subjected to evaporation under vacuum, by means of the evaporator represented in Fig. 6, between the heating resistance 7 and the heating resistance 8, which involves the chamber of the main endless screw conveyor 50;
- a fourth lengthy passage region, where the soy paste is subjected to a second compression with heating between the heating resistance 8 and the heating resistance 9 and between the heating resistance 9 and the heating resistance 10, said heating resistances 9 and 10 involving the chamber of the main endless screw conveyor 50;
- a fifth passage region, where the soy paste is subjected to evaporation under vacuum, by means of the evaporator represented in Fig. 6, between the heating resistance 10 and the heating resistance 11, which involves the chamber of the main endless screw conveyor 50;
- a sixth passage region where the soy paste is subjected to a third compression with heating, between the heating resistance 11 and the extrusion head, it being interposed in this region a heating resistance 12.

The sixth region 25 ends in the extrusion head. Two heating resistances 13 and 14 heat the said extrusion head.

As shown in Figs. 1 and 3 there are associated to said third and fifth passage regions evaporators under vacuum, which are described with greater detail with reference to Figs. 6 and 7.

As support means the dehydration device, according to the present invention, has a supply and electrical distribution box 37 and a control board 2.

The electrical supply and distribution box 37 assures the electrical supply of the heating resistances 6, 7, 8, 9, 10, 11, 12, 13 and 14 and resistances associated to the evaporators and of the temperature sensors 52, 53, 54, 55, 56, 57, 58, and additionally of the temperature sensors associated to the heating resistances 13 and 14, and of the sensors associated to the heating resistances of the evaporators, as well as assures the electrical supply of the solenoid valves 38, 39, 40, 41, 42, 43, 44, which control the flow rate of refrigerating oil of said heating resistances 6, 7, 8, 9, 10, 11 and 12, as well as of the solenoid valves associated to the heating resistances 13 and 14, and of the solenoid valves associated to the heating resistances of the evaporators.

Said refrigerating oil of food grade circulates in a refrigerating auxiliary circuit, which comprises a refrigerating oil tank 21 for said heating resistances 6 to 16, with an oil storage capacity of up to 1001, a heat exchanger, for refrigeration of the oil, heated in said heating resistances, circulated with refrigerating water coming directly from the public supply network. The water exiting the said heat exchanger is recovered.

The temperature of the heating resistances 6 to 12 is controlled by the solenoid valves 38 to 44 and the temperature of the heating resistances 13 to 16 by the solenoid valves associated thereto, which send more or less oil from the cooling circuit to said heating resistances 6 to 16. All said solenoid valves are controlled by means of the control board 2 according to the signals from the temperature sensors 52 to 58, as well as from the temperature sensors associated to the heating resistances 13 to 16, in order to maintain the temperature of the heating resistances to the optimal process temperatures. Tubes preferably made of stainless steel connect said solenoid valves to said refrigerating oil circuit.

The working temperatures of the heating resistances are as follows:
- resistances 6, 7, 8 and 9 from 250°C to 350°C;
- resistances 10, 11 and 12 from 200°C to 300°C;
- resistances 13 and 14 from 150°C to 200°C.

The control board 2 includes a controller of said heating resistances, a speed variation controller of the main endless conveyor 50, a display for monitoring the electricity consumption and a pressure control of the pressure in the intake of soy paste in the main endless conveyor 50.

The extrusion head 25 is consists in a fixed part attached to the end of the main body 1 and in a mould 26 hinged in the fixed part in order to enable its opening. The fixed part is associated to the heating resistance 13 and the mould is associated to the heating resistance 14.

The extrusion head has a circular shape, being intended to confer to the soy paste its final shape.

Figs. 6 and 7 show the details of each one of the two evaporators under vacuum illustrated in Fig. 1, arranged respectively in the third passage region between the heating resistance 7 and the heating resistance 8 and the fifth passage region between the heating resistance 10 and the heating resistance 11.

Each one of said evaporators communicates through a side opening with the chamber of the main endless screw conveyor 50. Each one of said evaporators includes an endless screw conveyor which closed tubular body is almost cylindrical and presents longitudinally a small protuberance which forms interiorly a small steam passing channel. In the interior of said tubular body works an endless screw 46, which function is to clear the evaporator and to return to the chamber of the main endless screw conveyor 50 small debris dragged by the negative pressure that exists in its interior. A vacuum pump, not represented, produces a negative pressure in the interior of said evaporator tubular body. Said pump is connected to the tubular body through the connection opening 47. A heating resistance heats said tubular body.

The pressure of the vacuum pump connected to both evaporators through the connecting opening 47 is in the range from -0,5 to -0,7 bar.

The process, which is performed in said dehydration device, comprises essentially the following steps:
a) automatic feeding of the dehydration device, by means of the feeder 18 with the soy paste, which consists of a open body endless screw conveyor 18', which feeds another compression closed body endless screw conveyor 19 with pressure automatic control;
b) conveying of said soy paste from the intake of the main body 1 through the main endless screw conveyor 50 and heating in the first passage region in the interior of said main endless screw conveyor, between said intake and an heating resistance 6;
c) first compression with heating of said soy paste during said conveying in a second passage region in said main endless screw conveyor 50, between the heating resistance 6 and the heating resistance 7;
d) first dehydration of said soy paste by subjecting the same to a evaporation under vacuum during said conveying in a third passage region in said main endless screw conveyor 50, between the heating resistance 7 and the heating resistance 8;
e) second compression with heating of said soy paste, during said conveying in a fourth lengthy passage region in said main endless screw conveyor 50, between the heating resistance 8 and the heating resistance 9 and between the heating resistance 9 and the heating resistance 10;
f) second dehydration of said soy paste by subjecting the same to a evaporation under vacuum in a fifth passage region in said main endless screw conveyor 50, between the heating resistance 10 and the heating resistance 11;
g) third compression with heating of said soy paste during said conveying in a sixth passage region in said main body 1, between the heating resistance 11 and the extrusion head 25;
h) extrusion with heating of said soy paste in the extrusion head 25, by the heating resistances 13 and 14 arranged in the extrusion head 25 in order to optimize said extrusion step.

During the performing of the steps of the first and second dehydration d) and f) there are performed the additional steps d') and f') of evaporation under vacuum and of recuperation of soy paste residual portions dragged to the discharge due to the evaporation under vacuum.

### List of the drawing references

1 - Main body
2 - Control board
3 - Soy paste feeding pipe
4 - Outlet of the refrigerating oil to the solenoid valves
5 - Inlet of the refrigerating oil from the heating resistances
6 - Heating resistance
7 - Heating resistance
8 - Heating resistance
9 - Heating resistance
10 - Heating resistance
11 - Heating resistance
12 - Heating resistance
13 - Heating resistance
14 - Heating resistance
17 - Pressure controller
18 - Feeder
18' - Open body endless screw conveyor
19 - Open body endless conveyor
20 - Feeder engine
21 - Refrigerating oil tank of the heating resistances
22 - Refrigerating oil exchanger of the gearbox
23 - Driving electric motor
24 - Gearbox
25 - Extrusion head
26 - Mould
27 - Soy paste discharge tube
28 - Refrigerating oil pipe for the heating resistances
29 - Refrigerated oil pipe from 21
30-Electric supply for the heating resistance 6, for the solenoid valve 38 and for the temperature sensor 52
31 - Electric supply from the heating resistance 7, from the solenoid valve 39 and from the temperature sensor 53
32 - Electric supply from the heating resistance 8, from the solenoid valve 40 and from the temperature sensor 54
33 - Electric supply from the heating resistance 9, from the solenoid valve 41 and from the temperature sensor 55
34 - Electric supply from the heating resistance 10, from the solenoid valve 42 and from the temperature sensor 56
35 - Electric supply from the heating resistance 11, from the solenoid valve 43 and from the temperature sensor 57
36 - Electric supply from the heating resistance 12, from the solenoid valve 44 and from the temperature sensor 58
37 - Electronic distribution box supported in the main body 1
38 - Solenoid valve of the refrigerating oil circuit of the heating resistance 6
39 - Solenoid valve of the refrigerating oil circuit of the heating resistance 7
40 - Solenoid valve of the refrigerating oil circuit of the heating resistance 8
41 - Solenoid valve of the refrigerating oil circuit of the heating resistance 9
42 - Solenoid valve of the refrigerating oil circuit of the heating resistance 10
43 - Solenoid valve of the refrigerating oil circuit of the heating resistance 11
44 - Solenoid valve of the refrigerating oil circuit of the heating resistance 12
45 - Driving electric motor of the endless screw conveyor of the evaporator 46
46 - Endless screw
47 - Vacuum connecting opening
48 - Connection of the temperature sensor
49 - Heating resistance
50 - Main endless screw conveyor
50' - Endless screw of the conveyor 50
50" - Endless screw of the conveyor 50
51 - Small steam passage channel
52 - Temperature sensor associated to the heating resistance 6
53 - Temperature sensor associated to the heating resistance 7
54 - Temperature sensor associated to the heating resistance 8
55 - Temperature sensor associated to the heating resistance 9
56 - Temperature sensor associated to the heating resistance 10
57 - Temperature sensor associated to the heating resistance 11
58 - Temperature sensor associated to the heating resistance 12

Obviously, it is not intended that the invention is limited to the above described exemplary embodiment, but it is intended that the invention is widely employed within the scope of said embodiment, which applies the innovative principles of the present invention and which should not, therefore, be considered as limitative of the scope of the invention as claimed in the appended claims.

### Bibliographic references

Amin, I. and O. Mukhrizah (2006). "Antioxidant capacity of methanolic and water extracts prepared from food-processing by-products." Journal of the science of food and agriculture 86(5): 778-784.
Aplevicz, K. S. and I. M. Demiate (2007). "Análises físico-químícas de pré-misturas de pães de queijo e produção de pães de queijo com adição de okara" Ciência e Agrotecnologia 31: 1416-1422.
Bomdespacho, L. Q., D. C. U. Cavallini, et al. (2011). "The use of soy residue (Okara) in the processing of chicken hamburger, fermented with Lactobacillus acidophilus CRL 1014." 2011.
Bowles, S. and I. M. Demiate (2006). "Caracterização físico-química de okara e aplicação em pães do tipo francês." Ciênc. Tecnol. Aliment., Campinas, 26 (3): 652-659.
Grizotto, R. K., C. R. G. Rufi, et al. (2010). "Evaluation of the quality of a molded sweet biscuit enriched with okara flour." Cienc. Tecnol. Aliment., Campinas 30: 270-275.
Gundyaeva, A. A., S. I. Lukina, et al. Method of preparing half-finished biscuit of high nutritive value, VORON TECHN ACAD (VOTE-Soviet Institute): 0.
Jackson, C. J. C., J. P. Dini, et al. (2002). "Effects of processing on the content and composition of isoflavones during manufacturing of soy beverage and tofu." Process Biochemistry 37(10): 1117-1123.
Jiménez-Escrig, A., M. Alaiz, et al. (2010). "Health-promoting activities of ultrafiltered okara protein hydrolysates released by in vitro gastrointestinal digestion: identification of active peptide from soybean lipoxygenase." European Food Research and Technology 230(4): 655-663.
Katayama, M. and L. A. Wilson (2008). "Utilization of Okara, a Byproduct from Soymilk Production, through the Development of Soy-Based Snack Food." Journal of Food Science 73(3): S152-S157.
Kato, T., I. Shiga, et al. (1986). "Preservation of Okara (soybean residue from soy mash) by lactic acid fermentation." Journal of the Japanese Society for Food Science and Technology 33((12): 837-841.
Khare, S. K., K. Jha, et al. (1995). "Citric acid production from Okara (soy-residue) by solid-state fermentation." Bioresource Technology 54(3): 323-325.
Liu, D. and X. Tan Preparation of carrot cake, involves heating carrot juice, sodium caseinate and sucrose, adding milk, flavoring agent, starch, okara powder, sucrose and carrot pulp, to obtain cake material, subjecting cake material to baking, Univ Shandong (Usha): 7.
Mateos-Aparicio, I., C. Mateos-Peinado, et al. (2010). "Multifunctional antioxidant activity of polysaccharide fractions from the soybean byproduct okara". Carbohydrate Polymers 82(2): 245-250.
Matsumoto, K., Y. Watanabe, et al. (2007). "Okara, soybean residue, prevents obesity in a diet-induced murine obesity model." Biosci Biotechnol Biochem 71(3): 720-727.
Muramatsu, N., H. Karasawa, et al. (1995). "Drying test of water-absorbing synthetic-polymers and okara". Research Report of Food Technology Research Institute of Nagano Prefecture 23: 37-43.
Muramatsu, N., H. Karasawa, et al. (1995). "Effects of addition of water-absorbing synthetic-polymers to okara on dehydration and cohesion". Research Report of Food Technology Research Institute of Nagano Prefecture 23: 28-31.
Muramatsu, N., H. Karasawa, et al. (1995). "Effects of use of water-absorbing synthetic-polymer sheats on dehyderation from okara." Research Report of Food Technology Research Institute of Nagano Prefecture 23: 32-36.
Noguchi, A. (1987). Method for the preparation of textured soybean draff, Director of National Food Research Institute, Ministry of Agriculture, Foresty and Fisheries. 4642241.
O'Toole, D. K. (1999). "Characteristics and Use of Okara, the Soybean Residue from Soy Milk Production A Review." Journal of Agricultural and Food Chemistry 47(2): 363-371.
Ohno, A., T. Ano, et al. (1993). "Production of the antifungal peptide antibiotic, iturin by Bacillus subtilis NB22 in solid state fermentation." Journal of Fermentation and Bioengineering 75(1): 23-27.
Rotem, I. and N. Almog Processing of okara for use in food product, e.g. breakfast cereal, granola or paste, involves cooling okara and packaging cooled okara in absence of oxygen, ROTEM I (ROTE-Individual) ALMOG N (ALMO-Individual).
Santos, G. C., R. Bedani, et al. (2008). "Utilização de resíduos de soja (okara) no desenvolvimento de um cereal matinal." 2008.
Tadano, T., K. Yokoya, et al. (1981). "Studies on pneumatic drying of "Okara"." Bulletin of the College of Agriculture and Veterinary Medicine - Nihon University 38: 149-154.
Turhan, S., H. Temiz, et al. (2007). "Utilization of wet okara in low-fat beef patties." Journal of Muscle Foods 18(2): 226-235.
Turhan, S., H. Temiz, et al. (2009). "Characteristics of beef patties using okara powder." Journal of Muscle Foods 20(1): 89-100.
Vishwanathan, K. H., K. Govindaraju, et al. (2011). "Production of okara and soy protein concentrates using membrane technology". J Food Sci 76(1): E158-164.
Waliszewski, K. N., V. Pardio, et al. (2002). "Physicochemical and sensory properties of corn tortillas made from nixtamalized corn flour fortified with spent soymilk residue (okara)". Journal of Food Science 67(8): 3194-3197.

## Claims

1. Soy paste dehydration device comprising a main body (1) and a feeder (18), being mounted in said main body (1) a main endless screw conveyor (50), a driving electric motor (23), a gear box (24), these two last components serving to drive said conveyor (50), which is arranged in the interior of the main body (1), **characterized in that** there are defined in the interior of said main endless screw conveyor (50) six passage regions:
a first passage region between the intake of the soy paste and the downstream end of the first heating resistance (6), which involves in a relatively long extension the chamber of the main endless screw conveyor (50);
- a second passage region, where the soy paste is subjected to a first compression with heating, between the heating resistance (6) and the heating resistance (7), which involves the chamber of the main endless screw conveyor (50);
- a third passage region, where the soy paste is subjected to evaporation under vacuum, by means of an evaporator, between the heating resistance (7) and the heating resistance (8), which involve the chamber of the main endless screw conveyor (50);
- a fourth lengthy passage region, where the soy paste is subjected to a second compression with heating between the heating resistance (8) and the heating resistance (9) and between the heating resistance (9) and the heating resistance (10), said heating resistances (9 and 10) involving the chamber of the main endless screw conveyor (50);
- a fifth passage region, where the soy paste is subjected to evaporation under vacuum, by means of an evaporator, between the heating resistance (10) and the heating resistance (11), which involves the chamber of the main endless screw conveyor (50);
- a sixth passage region where the soy paste is subjected to a third compression with heating, between the heating resistance (11) and the extrusion head (25), it being interposed in this region a heating resistance (12), said sixth region ending in the extrusion head (25), which is heated by two heating resistances (13 and 14);
the temperatures of said heating resistances varying between the following values: - resistances (6, 7, 8 and 9) from 250°C to 350°C; - resistances (10, 11 and 12) from 200°C to 300°C; - resistances (13 and 14) from 150°C to 200°C:
the temperature of said heating resistances (6, 7, 8, 9, 10, 11 and 12) being regulated by a cooling circuit, which comprises the flow regulation valves (38, 39, 40, 41, 42, 43, 44) and the temperature sensors (52, 53, 54, 55, 56, 57 and 58);
**in that** there are mounted in the main body of the dehydration device, at least, two evaporators that work under vacuum conditions, which are in communication with said third and fifth passage regions; and
**in that** said main endless screw conveyor (50) comprises two endless screws (50', 50").

2. Device according to claim 1, **characterized in that** said heating resistances (6, 7, 8, 9, 10, 11 and 12) are annular resistances, arranged spaced between each other in the chamber of the main endless screw conveyor (50).

3. Soy paste dehydration process to be performed in the device according to any of the previous claims, **characterized in that** it comprises the following steps of:
a) automatic feeding of the main endless screw conveyor (50) with the soy paste, by means of the feeder (18);
b) conveying of said soy paste through the main endless screw conveyor (50) from its intake and heating in the lengthy first passage region in the interior of said main endless screw conveyor (50), between said intake and heating resistance (6);
c) compression with heating of said soy paste during said conveying in a second passage region in said main endless screw conveyor (50), between the heating resistance (6) and the heating resistance (7);
d) dehydration of said soy paste by subjecting the same to an evaporation under vacuum during said conveying in a third passage region in said main endless screw conveyor (50), between the heating resistance (7) and the heating resistance (8);
e) compression with heating of said soy paste, during said conveying in a fourth lengthy passage region in said main endless screw conveyor (50), between the heating resistance (8) and the heating resistance (9) and between the heating resistance (9) and the heating resistance (10);
f) dehydration of said soy paste by subjecting the same to evaporation under vacuum in a fifth passage region in said main endless screw conveyor (50), between the heating resistance (10) and the heating resistance (11);
g) compression with heating of said soy paste during said conveying in a sixth passage region in said main endless screw conveyor (50), between the heating resistance (11) and the extrusion head (25), being interposed in this region a heating resistance (12);
h) extrusion with heating of said soy paste in the extrusion head (25), by the heating resistances (13 and 14) arranged in the extrusion head (25) in order to optimize said extrusion step;
**in that** the working temperatures of the heating resistances vary between the following values: - resistances (6, 7, 8 and 9) from 250°C to 350°C; - resistances (10, 11 and 12) from 200°C to 300°C; - resistances (13 and 14) from 150°C to 200°C;
**in that** it further comprises the additional steps d') and f') of evaporation under vacuum and of recuperation of soy paste residual portions dragged to the discharge due to the evaporation under vacuum, during the realization of the dehydration steps d) and f); and
**in that** in steps d) and f) it is used a pressure in the evaporators of -0,5 to -0,7 bar, and **in that** the working temperature of the resistance associated to the evaporators vary between 110°C and 130°C.

## Patentansprüche

1. Sojapastendrocknungsvorrichtung mit einem Hauptkörper (1) und einem Zuführer (18), wobei in dem Hauptkörper (1) sind ein endloser Hauptschneckenförderer (50), ein elektrischer Antriebsmotor (23), ein Getriebe (24) montiert sind, wobei diese beiden letzten Komponenten zum Antrieb des Förderers (50) dienen, der im Inneren des Grundkörpers (1) angeordnet ist, **dadurch gekennzeichnet, dass** im Inneren des endlosen Hauptschneckenförderers (50) sechs Durchgangsbereiche definiert ist:
- einen ersten Durchgangsbereich zwischen dem Einlass der Sojapaste und dem stromabwärtigen Ende des ersten Heizwiderstands (6), der in einer relativ langen Ausdehnung die Kammer des endlosen Hauptschneckenförderers (50) umfasst;
- einen zweiten Durchgangsbereich, in dem die Sojapaste einer ersten Kompression unter Erwärmung unterzogen wird, zwischen dem Heizwiderstand (6) und dem Heizwiderstand (7), der die Kammer des endlosen Hauptschneckenförderers (50) umfasst;
- einen dritten Durchgangsbereich, in dem die Sojapaste unter Vakuum mittels eines Verdampfers verdampft wird, zwischen dem Heizwiderstand (7) und dem Heizwiderstand (8), die die Kammer der endlosen Hauptförderschnecke (50) betreffen;
- einen vierten langen Durchgangsbereich, in dem die Sojapaste einer zweiten Kompression unter Erwärmung zwischen dem Heizwiderstand (8) und dem Heizwiderstand (9) und zwischen dem Heizwiderstand (9) und dem Heizwiderstand (10) unterzogen wird, wobei die Erwärmung Widerstände (9 und 10), die die Kammer des endlosen Hauptschneckenförderers (50) betreffen;
- einen fünften Durchgangsbereich, in dem die Sojapaste unter Vakuum mittels eines Verdampfers verdampft wird, zwischen dem Heizwiderstand (10) und dem Heizwiderstand (11), der die Kammer der endlosen Hauptförderschnecke (50) umfasst;
- einen sechsten Durchgangsbereich, in dem die Sojapaste einer dritten Kompression unter Erwärmung unterzogen wird, zwischen dem Heizwiderstand (11) und dem Extrusionskopf (25), wobei in diesem Bereich ein Heizwiderstand (12) angeordnet ist, wobei der sechste Bereich in endet der Extrusionskopf (25), der von zwei Heizwiderständen (13 und 14) beheizt wird;
wobei die Temperaturen der Heizwiderstände zwischen den folgenden Werten variieren: - Widerstände (6, 7, 8 und 9) von 250°C bis 350°C; - Widerstände (10, 11 und 12) von 200°C bis 300°C; - Beständigkeiten (13 und 14) von 150°C bis 200°C:
wobei die Temperatur der Heizwiderstände (6, 7, 8, 9, 10, 11 und 12) durch einen Kühlkreislauf geregelt wird, der die Durchflussregulierventile (38, 39, 40, 41, 42, 43, 44) umfasst und die Temperatursensoren (52, 53, 54, 55, 56, 57 und 58);
dass im Hauptkörper der Entwässerungsvorrichtung mindestens zwei unter Vakuumbedingungen arbeitende Verdampfer montiert sind, die mit dem dritten und fünften Durchgangsbereich in Verbindung stehen; und
dass der endlose Hauptschneckenförderer (50) zwei endlose Schnecken (50', 50") umfasst.

2. Vorrichtung nach Anspruch 1, **dadurch gekennzeichnet, daß** die Heizwiderstände (6, 7, 8, 9, 10, 11 und 12) in der Kammer der endlosen Hauptschnecke (50) voneinander beabstandete Ringwiderstände sind.

3. Verfahren zur Dehydratisierung von Sojapaste, das in der Vorrichtung nach einem der vorhergehenden Ansprüche durchzuführen ist, **dadurch gekennzeichnet, dass** es die folgenden Schritte umfasst:
a) automatische Beschickung des endlosen Hauptschneckenförderers (50) mit der Sojapaste mittels des Zuführers (18);
b) Fördern der Sojapaste durch den Endlosschnecken-Hauptförderer (50) von seinem Einlauf und Erhitzen im langgestreckten ersten Durchgangsbereich im Inneren des Endlos-Hauptschneckenförderers (50) zwischen dem Einlauf und dem Heizwiderstand (6);
c) Verdichten unter Erhitzen der Sojapaste während des Förderns in einem zweiten Durchgangsbereich in dem endlosen Hauptschneckenförderer (50) zwischen dem Heizwiderstand (6) und dem Heizwiderstand (7);
d) Entwässerung der Sojapaste, indem diese während des Förderns einer Verdampfung unter Vakuum in einem dritten Durchgangsbereich in dem endlosen Hauptschneckenförderer (50) zwischen dem Heizwiderstand (7) und dem Heizwiderstand (8) unterzogen wird;
e) Verdichten unter Erhitzen der Sojapaste während des Förderns in einem vierten langen Durchgangsbereich in der endlosen Hauptförderschnecke (50) zwischen dem Heizwiderstand (8) und dem Heizwiderstand (9) und zwischen dem Heizwiderstand (9) und den Heizwiderstand (10);
f) Dehydratisieren der Sojapaste, indem sie in einem fünften Durchgangsbereich in dem endlosen Hauptschneckenförderer (50) zwischen dem Heizwiderstand (10) und dem Heizwiderstand (11) unter Vakuum verdampft wird;
g) Verdichten unter Erwärmung der Sojapaste während des Förderns in einem sechsten Durchgangsbereich in dem endlosen Hauptschneckenförderer (50), zwischen dem Heizwiderstand (11) und dem Extrusionskopf (25), wobei in diesem Bereich ein Heizwiderstand angeordnet ist (12);
h) Extrusion mit Erwärmung der Sojapaste im Extrusionskopf (25) durch die im Extrusionskopf (25) angeordneten Heizwiderstände (13 und 14), um den Extrusionsschritt zu optimieren;
dass die Arbeitstemperaturen der Heizwiderstände zwischen folgenden Werten variieren: - Widerstände (6, 7, 8 und 9) von 250°C bis 350°C; - Widerstände (10, 11 und 12) von 200°C bis 300°C; - Beständigkeiten (13 und 14) von 150°C bis 200°C;
dass es ferner die zusätzlichen Schritte d') und f) des Eindampfens unter Vakuum und der Rückgewinnung von Sojapastenrestanteilen umfasst, die aufgrund des Eindampfens unter Vakuum zum Austrag geschleppt wurden, während der Entwässerungsschritte d) und f) ; und
dass in den Schritten d) und f) ein Druck in den Verdampfern von -0,5 bis -0,7 bar verwendet wird und dass die Arbeitstemperatur des den Verdampfern zugeordneten Widerstands zwischen 110°C und 130°C variiert.

## Revendications

1. Dispositif de déshydratation de pâte de soja comprenant un corps principal (1) et un alimentateur (18), étant monté dans ledit corps principal (1) un convoyeur principal à vis sans fin (50), un moteur électrique d'entraînement (23), une boîte de vitesses (24), ces deux derniers éléments servant à entraîner ledit convoyeur (50), qui est disposé à l'intérieur du corps principal (1), **caractérisé en ce que** sont définis à l'intérieur dudit convoyeur principal à vis sans fin (50) six régions de passage :
une première zone de passage entre l'admission de la pâte de soja et l'extrémité aval de la première résistance chauffante (6), qui implique dans un prolongement relativement long la chambre de la vis sans fin principale (50);
un deuxième région de passage, où la pâte de soja est soumise à une première compression avec chauffage, entre la résistance chauffante (6) et la résistance chauffante (7), qui implique la chambre du transporteur à vis sans fin principal (50);
une troisième région de passage, où la pâte de soja est soumise à une évaporation sous vide, au moyen d'un évaporateur, entre la résistance chauffante (7) et la résistance chauffante (8), qui impliquent la chambre du transporteur à vis sans fin principal (50);
une quatrième région de passage longue, où la pâte de soja est soumise à une seconde compression avec chauffage entre la résistance chauffante (8) et la résistance chauffante (9) et entre la résistance chauffante (9) et la résistance chauffante (10), ledit chauffage des résistances (9 et 10) impliquant la chambre du convoyeur à vis sans fin principal (50);
une cinquième région de passage, où la pâte de soja est soumise à une évaporation sous vide, au moyen d'un évaporateur, entre la résistance chauffante (10) et la résistance chauffante (11), qui implique la chambre du transporteur à vis sans fin principal (50);
une sixième région de passage où la pâte de soja est soumise à une troisième compression avec chauffage, entre la résistance chauffante (11) et la tête d'extrusion (25), il est interposé dans cette région une résistance chauffante (12), ladite sixième région se terminant par la tête d'extrusion (25), qui est chauffée par deux résistances chauffantes (13 et 14);
les températures desdites résistances chauffantes variant entre les valeurs suivantes : - résistances (6, 7, 8 et 9) de 250°C à 350°C; - résistances (10, 11 et 12) de 200°C à 300°C; - résistances (13 et 14) de 150°C à 200°C;
la température desdites résistances chauffantes (6, 7, 8, 9, 10, 11 et 12) étant régulée par un circuit de refroidissement, qui comprend les vannes de régulation de débit (38, 39, 40, 41, 42, 43, 44) et les capteurs de température (52, 53, 54, 55, 56, 57 et 58);
**en ce que** sont montés dans le corps principal du dispositif de déshydratation, au moins, deux évaporateurs fonctionnant sous vide, qui sont en communication avec lesdites troisième et cinquième régions de passage; et
**en ce que** ledit transporteur à vis sans fin principal (50) comprend deux vis sans fin (50', 50").

2. Dispositif selon la revendication 1, **caractérisé en ce que** lesdites résistances chauffantes (6, 7, 8, 9, 10, 11 et 12) sont des résistances annulaires, disposées espacées les unes des autres dans la chambre de la vis sans fin principale (50).

3. Procédé de déshydratation de pâte de soja à réaliser dans le dispositif selon l'une quelconque des revendications précédentes, **caractérisé en ce qu'**il comprend les étapes suivantes de :
a) alimentation automatique du convoyeur principal à vis sans fin (50) avec la pâte de soja, au moyen de l'alimentateur (18);
b) transport de ladite pâte de soja à travers le convoyeur à vis sans fin principal (50) depuis son admission et chauffage dans la longue région de premier passage à l'intérieur dudit convoyeur à vis sans fin principal (50), entre ladite admission et résistance chauffante (6);
c) compression avec chauffage de ladite pâte de soja pendant ledit convoyage dans une seconde zone de passage dudit convoyeur à vis sans fin principal (50), entre la résistance chauffante (6) et la résistance chauffante (7);
d) déshydratation de ladite pâte de soja en la soumettant à une évaporation sous vide pendant ledit convoyage dans une troisième zone de passage dans ledit convoyeur à vis sans fin principal (50), entre la résistance chauffante (7) et la résistance chauffante (8);
e) compression avec chauffage de ladite pâte de soja, pendant ledit convoyage dans une quatrième zone de passage longue dans ledit convoyeur à vis sans fin principal (50), entre la résistance chauffante (8) et la résistance chauffante (9) et entre la résistance chauffante (9) et la résistance chauffante (10);
f) déshydratation de ladite pâte de soja en la soumettant à une évaporation sous vide dans une cinquième zone de passage dans ledit convoyeur à vis sans fin principal (50), entre la résistance chauffante (10) et la résistance chauffante (11);
g) compression avec chauffage de ladite pâte de soja lors dudit convoyage dans une sixième zone de passage dudit convoyeur principal à vis sans fin (50), entre la résistance chauffante (11) et la tête d'extrusion (25), étant interposée dans cette zone une résistance chauffante (12);
h) extrusion avec chauffage de ladite pâte de soja dans la tête d'extrusion (25), par les résistances chauffantes (13 et 14) disposées dans la tête d'extrusion (25) afin d'optimiser ladite étape d'extrusion;
**en ce que** les températures de fonctionnement des résistances chauffantes varient entre les valeurs suivantes : - résistances (6, 7, 8 et 9) de 250°C à 350°C; - résistances (10, 11 et 12) de 200°C à 300°C; - résistances (13 et 14) de 150°C à 200°C;
**en ce qu'** il comprend en outre les étapes supplémentaires d') et f) d'évaporation sous vide et de récupération des portions résiduelles de pâte de soja entraînées vers l'évacuation du fait de l'évaporation sous vide, lors de la réalisation des étapes de déshydratation d) et f); et
**en ce que** dans les étapes d) et f) on utilise une pression dans les évaporateurs de -0,5 à -0,7 bar, et **en ce que** la température de fonctionnement de la résistance associée aux évaporateurs varie entre 110°C et 130° C.
